# EUROPEAN PATENT SPECIFICATION

(11) **EP 2 975 713 B1**
(45) Date of publication and mention of the grant of the patent: **24.03.2021**
(21) Application number: 14177656.7
(22) Date of filing: 18.07.2014
(51) Int. Cl.: H02G 3/06, H02G 15/013

(54) **Sealing device for sealing engagement with an elongate object**
Abdichtungsvorrichtung zum Abdichten eines langgestreckten Gegenstandes
Dispositif d'étanchéité pour engagement étanche avec un objet allongé

(43) Date of publication of application: 20.01.2016
(73) Proprietor: CMP Products Limited, Northumberland NE23 1WH (GB)
(72) Inventor: SOUTHERN, David, Cramlington Northumberland, NE23 1WH (GB)
(74) Representative: Vinsome, Rex Martin

(56) References cited:
- EP-A1- 1 074 776
- EP-A2- 2 690 727
- CH-A- 390 341
- DE-A1- 3 109 583
- DE-U1-202005 007 288
- US-A1- 2014 077 409

## Description

The present invention relates to a sealing device for sealing engagement with an elongate object, and relates particularly, but not exclusively, to a sealing device for use in a cable gland for sealing engagement with a cable.

Cable glands for sealing engagement with a cable for connecting cables to an enclosure are known in which a seal deforming part has fingers, ends of which are urged radially inwards to bring a seal into engagement with a cable passing through the cable gland. However, such arrangements suffer from the drawback that the range of diameters over which effective sealing with the cable can be achieved is limited.

US2014077409 discloses a sealing device having a plurality of coaxially arranged tubular sealing elements which are interconnected and which can be separated for using the sealing device with cables of different diameters.

CH390341 discloses a cable gland with a deformable seal insert which has three coaxially arranged tubular members which are interconnected and which can be separated to allow sealing of cables of different diameters.

The present invention seeks to render the prior art easier to assemble and to use.

DE3109583 discloses an apparatus according to the preamble of claim 1.

According to the present invention, there is provided an apparatus for sealing engagement with an elongate object as defined in claim 1.

By providing a plurality of sealing members, wherein each of a plurality of said sealing members defines a respective bore for receiving an elongate object, and at least one connecting portion for connecting a pair of adjacent substantially coaxial said sealing members, and adapted to be broken to enable separation of said sealing members, this provides the advantage of enabling sealing members having insufficiently large diameters to be removed, thereby enabling effective sealing with a wider range of cable diameters to be achieved.

This also provides the advantage of making an apparatus such as a cable gland incorporating the sealing device easier to assemble.

The sealing device may define a surface of tapering cross section adjacent at least one end thereof.

This provides the advantage of enabling more effective sealing engagement with the elongate object.

Said connecting portions may be arranged adjacent an end of the sealing device.

This provides the advantage of making the sealing device easier to mould.

At least one said engagement surface may include at least one portion of reducing distance from an axis of said apparatus with movement along said axis and threaded engagement of said first threaded portion with said second threaded portion may cause axial movement of said elongate members relative to said portion.

The apparatus may further comprise abutment means on said first body part for abutting said sealing device.

This provides the advantage of enabling correct location of the sealing device, while facilitating displacement of an inner sealing member.

Preferred embodiments of the invention will now be described, by way of example only and not in any limitative sense, with reference to the accompanying drawings, in which:-
Figure 1 is an exploded front perspective view of a cable gland of a first embodiment of the present invention;
Figure 2 is an exploded rear perspective view of the cable gland of Figure 1;
Figure 3 is a partially cut away view corresponding to Figure 1;
Figure 4 is a rear perspective view of a sealing device of the cable gland of Figures 1 to 3;
Figure 5 is a rear view of the sealing device of Figure 4;
Figure 6 is a side cross-sectional view of the sealing device of Figure 4;
Figure 7 is an exploded perspective view of the sealing device of Figure 4;
Figure 8 is a side cross-sectional view of the assembled cable gland of Figure 1 before receiving a cable;
Figure 9 is a side cross-sectional view, corresponding to Figure 8, with the sealing device in sealing engagement with a cable of small diameter;
Figure 10 is a side cross-sectional view of the cable gland of Figure 1 in an assembled condition prior to insertion of a cable of larger diameter;
Figure 11 is a side cross-sectional view, corresponding to Figure 10, after insertion of the cable and displacement of the smaller sealing member of the sealing device;
Figure 12 is a side cross-sectional view, corresponding to Figure 9, with the sealing member in sealing engagement with a cable;
Figure 13 is an exploded front perspective view, corresponding to Figure 1, of a cable gland of a second embodiment of the present invention;
Figure 14 is an exploded rear perspective view, corresponding to Figure 2, of the cable gland of Figure 13;
Figure 15 is a front perspective view of a removable insert of the cable gland of Figures 13 and 14;
Figure 16 is a side cross-sectional view of the insert of Figure 15;
Figure 17 is a rear perspective view of the insert of Figure 15;
Figure 18 is a side cross-sectional view, corresponding to Figure 8, of the assembled cable gland of Figure 13 before receiving a cable; and
Figure 19 is a side cross-sectional view, corresponding to Figure 9, with the sealing device in sealing engagement with a cable of small diameter.

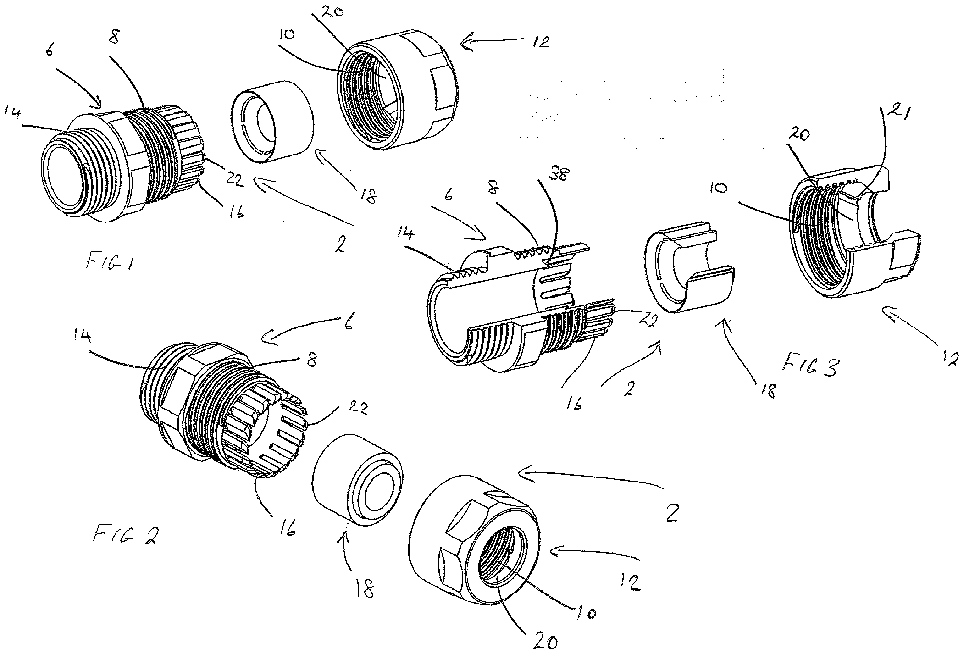

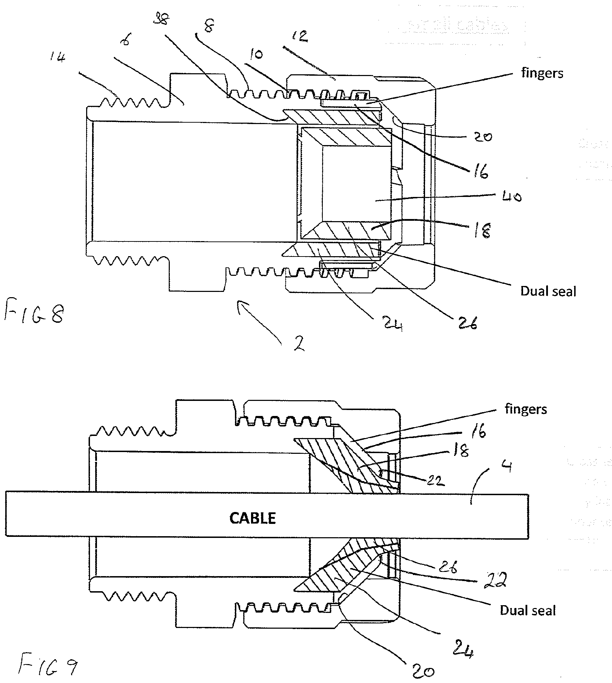

Referring to Figures 1 to 3, a cable gland 2 for receiving a cable 4 (Figures 8 to 12) and mounting the cable 4 to an enclosure (not shown) has a first body part 6 having a first threaded portion 8 for engaging a second threaded portion 10 provided on a second body part 12. A third threaded portion 14 is provided on the first body part 6 for mounting the cable gland 2 to a threaded part (not shown) on the enclosure. Seal deforming means in the form of a plurality of deformable elongate members 16 formed of plastics material extend from an end of the first body part 6 and are arranged to surround a sealing device 18 and engage a first engagement surface in the form of an inclined surface 20 provided on the second body part 12 such that axial movement of the elongate members 16 along the inclined engagement surface 20 deflects ends 22 of the elongate members 16 towards a cable 4 extending through the cable gland 2 to urge the sealing device 18 into sealing engagement with the cable 4.

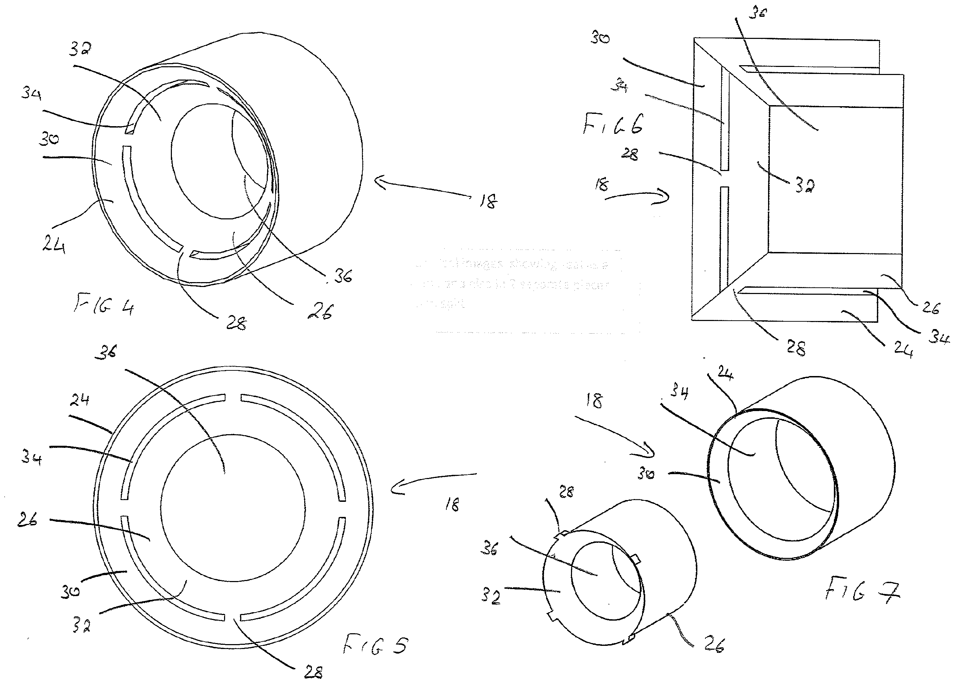

The sealing device 18 is shown in more detail in Figures 4 to 7 and has a pair of generally coaxially arranged tubular sealing members 24, 26 of resilient material connected by connecting portions in the form of breakable tabs 28 which are breakable to enable separation of the sealing members 24, 26. The sealing members 24, 26 are provided with respective frusto conical surfaces 30, 32 which have generally the same angle of inclination, and cylindrical bores 34, 36 for receiving a cable 4. It will be appreciated by persons skilled in the art that the surfaces 30, 32 can be other than frusto-conical, for example cylindrical, or cuboid.

The operation of the cable gland 2 for sealing to a cable 4 of small diameter is shown with reference to Figures 8 and 9. The sealing device 18 is initially located in the first body part 6 such that a first end of the sealing device abuts an abutment surface 38 in the first body part 6 and is surrounded by the elongate members 16. The second body part 12 is then mounted to the first body part 6 by means of engagement of the first threaded portion 8 with the second threaded portion 10. While the sealing device 18 is still in its uncompressed state, the cable 4 is inserted into a bore 40 of the cable gland 2 and passes through the bore 36 of the inner sealing member 26, since the outer diameter of the cable 4 is smaller than the inner diameter of the inner sealing member 26. The second body part 12 is then rotated relative to the first body part 6, as a result of which the ends 22 of the elongate members 16 engage the inclined surface 20 on the inside of the second body part 12, and the second body part 12 moves axially relative to the first body part 6. This causes the ends 22 of the elongate members 16 to be urged radially inwards towards the cable 4, as a result of which the sealing device 18 is deformed and is brought into sealing engagement with the outer surface of the cable 4 as shown in Figure 9. When the sealing device 18 is compressed to the necessary extent, ends 22 of the elongate members 16 engage grooves 21 (Figure 3) on the internal surface of the second body part 12. The grooves 21 have non-symmetrical profiles so that resistance of the grooves 21 to tightening of the second body part 12 onto the first body part 6 is less than resistance to loosening. This assists in preventing loosening of the first body part on the second body part 12 as a result of, for example, vibrations.

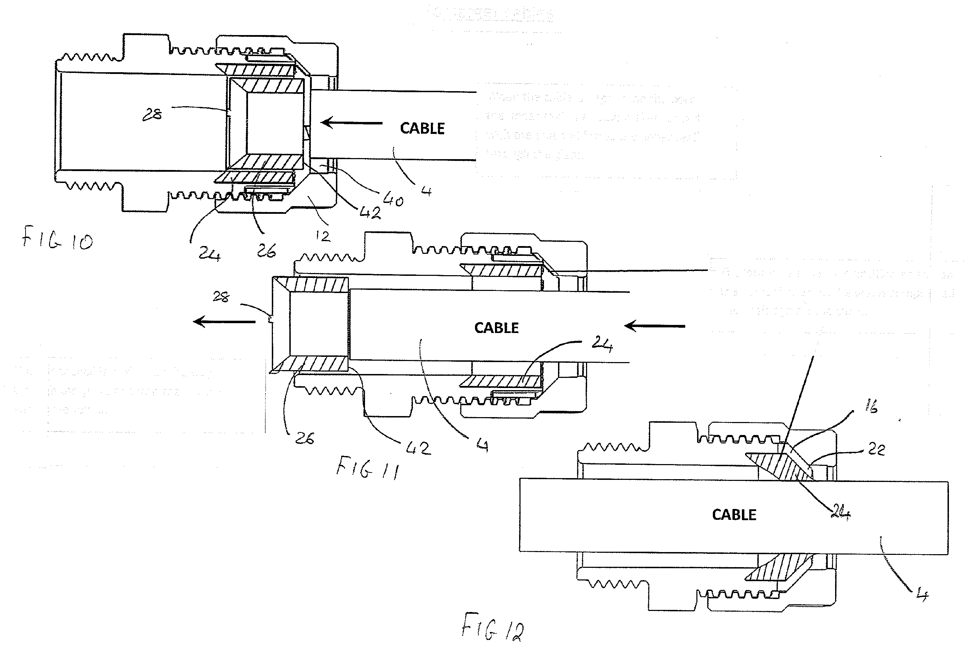

Figures 10 to 12 show the operation of the cable gland 2 in sealing to a cable 4 of larger diameter. The cable 4 is initially inserted into the bore 40 of the cable gland 2, and abuts an end surface 42 of the inner sealing member 26 because the outer diameter of the cable 4 is larger than the inner diameter of the inner sealing member 26, as shown in Figure 10. Referring now to Figure 11, as the cable 4 is urged further into the bore 40 of the cable gland 2, the force of the cable 4 on the end surface 42 inner sealing member 26 causes the tabs 28 to break, as a result of which the inner sealing member 26 is pushed along the bore 40 of the cable gland 2 by the cable 4 and is pushed into the enclosure and discarded.

The second body part 12 is then rotated relative to the first body part 6, as a result of which the ends 22 of the elongate members 16 are urged towards the cable 4. This causes the outer sealing member 24 to be deformed and brought into sealing engagement with the outer surface of the cable 4, as shown in Figure 12.

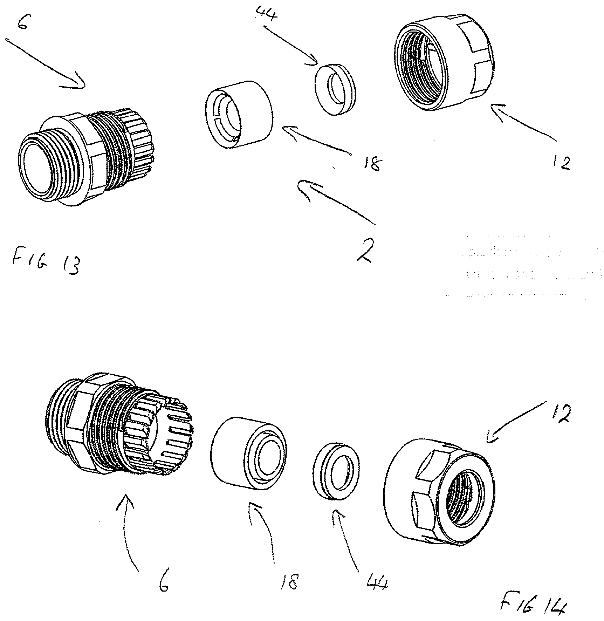

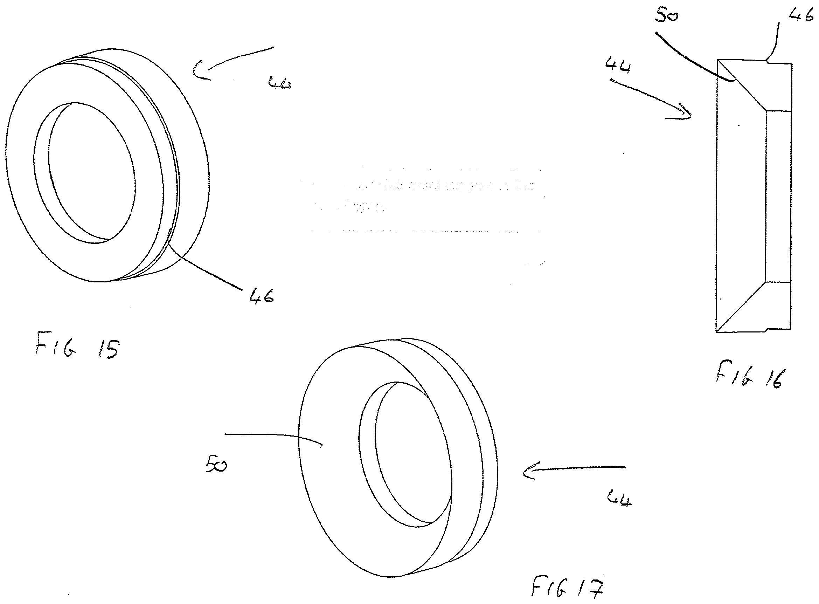

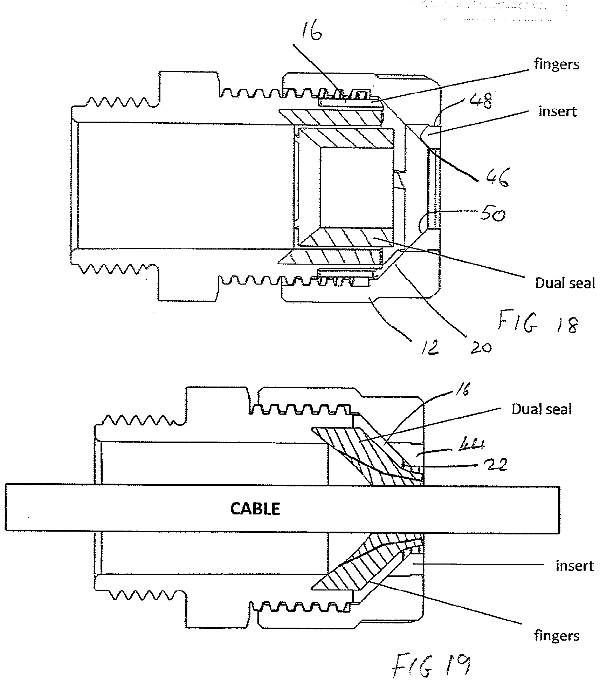

Figures 13 and 14 show a cable gland 2 of a second embodiment of the invention, having first 6 and second 12 body parts and sealing device 18 identical to those of the embodiment of Figures 1 to 3. The cable gland 2 is provided with a removable insert 44 having an abutment portion 46 (Figure 15) for location against a flange 48 of second body portion 12 (Figure 18) and a second engagement surface in the form of an inclined surface 50 (Figure 17), such that when the insert 44 is located in the second body portion 12, inclined surface 50 forms an extension of inclined surface 20. This provides additional support to the ends 22 of the elongate members 16 as shown in Figure 19.

It will be appreciated by persons skilled in the art that the above embodiment has been described by way of example only and not in any limitative sense, and that various alterations and modifications are possible without departure from the scope of the invention as defined by the appended claims.

## Claims

1. An apparatus (2)
for sealing engagement with an elongate object (4), the apparatus comprising:-
a sealing device (18);
a first body part (6) having a first threaded portion (8) ;
a second body part (12) having a second threaded portion (10) adapted to engage said first threaded portion (8);
seal deforming means (16) provided on said first body part and having a plurality of elongate members (16) having ends adapted to be displaced towards the elongate object extending through a bore (40) of the apparatus (2) to bring the sealing device (18) into sealing engagement with the elongate object (4);
at least one first engagement surface (20) provided on said second body part (12) for engaging at least some of said elongate members (16) to cause said ends of said elongate members (16) to be displaced towards said elongate object (4) as a result of threaded engagement of said first threaded portion (8) with said second threaded portion (10); and
a plurality of tubular sealing members (24, 26), wherein each of a plurality of said tubular sealing members defines a respective bore (34, 36) for receiving an elongate object, and said tubular sealing member is adapted to be deformed into sealing engagement with said object (4);
**characterized in that** the sealing device comprises: connecting portions in the form of breakable tabs (28) for connecting a pair of adjacent substantially coaxial said tubular sealing members (24, 26), and adapted to be broken by engagement of the elongate object with one of the tubular sealing members (24, 26) by means of urging of said elongate object (4) into the bore (40) of the apparatus to enable separation of said sealing members (24, 26).

2. An apparatus according to claim 1, wherein the sealing device (18) defines a surface (30, 32) of tapering cross section adjacent at least one end thereof.

3. An apparatus according to any one of the preceding claims, wherein
said connecting portions (28) are arranged adjacent an end of the sealing device (18).

4. An apparatus according to any one of the preceding claims, wherein at least one said
engagement surface (20) includes at least one portion of reducing distance from an axis of said apparatus with movement along said axis and threaded engagement of said first threaded portion (8) with said second threaded portion (10) may cause axial movement of said elongate members (16) relative to said portion.

5. An apparatus according to any one of the preceding claims, further comprising
abutment means (38) on said first body part for abutting said sealing device (18).

## Patentansprüche

1. Vorrichtung (2) zum dichtenden Eingriff mit einem länglichen Objekt (4),
wobei die Vorrichtung umfasst: -
eine Dichtungsvorrichtung (18);
ein erstes Körperteil (6) mit einem ersten Gewindeabschnitt (8);
ein zweites Körperteil (12) mit einem zweiten Gewindeabschnitt (10), der zum Eingriff mit dem ersten Gewindeabschnitt (8) eingerichtet ist;
eine Dichtungs-Verformungseinrichtung (16), die an dem ersten Körperteil vorgesehen ist und eine Vielzahl von länglichen Elementen (16) aufweist, deren Enden dazu eingerichtet sind, in Richtung des länglichen Objekts verschoben zu werden, das sich durch eine Bohrung (40) der Vorrichtung (2) erstreckt, um die Dichtungsvorrichtung (18) in dichtenden Eingriff mit dem länglichen Objekt (4) zu bringen;
mindestens eine erste Eingriffsfläche (20), die an dem zweiten Körperteil (12) vorgesehen ist, um mit mindestens einigen der länglichen Elemente (16) in Eingriff zu kommen, um zu bewirken, dass die Enden der länglichen Elemente (16) infolge des Gewindeeingriffs des ersten Gewindeabschnitts (8) mit dem zweiten Gewindeabschnitt (10) in Richtung des länglichen Objekts (4) verschoben werden; und
eine Vielzahl von röhrenförmigen Dichtungselementen (24, 26), wobei jedes aus einer Vielzahl der röhrenförmigen Dichtungselemente eine jeweilige Bohrung (34, 36) zur Aufnahme eines länglichen Objekts definiert und das röhrenförmige Dichtungselement eingerichtet ist, um in dichtenden Eingriff mit dem Objekt (4) verformt zu werden;
**dadurch gekennzeichnet, dass** die Dichtungsvorrichtung umfasst: Verbindungsabschnitte in Form von abbrechbaren Laschen (28) zum Verbinden eines Paars benachbarter, im Wesentlichen koaxialer röhrenförmiger Dichtungselemente (24, 26), die so beschaffen sind, dass sie durch den Eingriff des länglichen Objekts mit einem der röhrenförmigen Dichtungselemente (24, 26) mittels Drängen des länglichen Objekts (4) in die Bohrung (40) der Vorrichtung abgebrochen werden, um eine Trennung der Dichtungselemente (24, 26) zu ermöglichen.

2. Vorrichtung nach Anspruch 1, wobei die Dichtungsvorrichtung (18)
eine Fläche (30, 32) mit sich verjüngendem Querschnitt benachbart zu mindestens einem Ende davon definiert.

3. Vorrichtung nach einem der vorhergehenden Ansprüche, wobei
die Verbindungsabschnitte (28) benachbart zu einem Ende der Dichtungsvorrichtung (18) angeordnet sind.

4. Vorrichtung nach einem der vorhergehenden Ansprüche, wobei mindestens eine Eingriffsfläche (20) mindestens einen Abschnitt aufweist, dessen Abstand zu einer Achse der Vorrichtung sich bei Bewegung entlang dieser Achse verringert, und der Gewindeeingriff des ersten Gewindeabschnitts (8) mit dem zweiten Gewindeabschnitt (10) eine axiale Bewegung der länglichen Elemente (16) relativ zu diesem Abschnitt bewirken kann.

5. Vorrichtung nach einem der vorhergehenden Ansprüche, ferner umfassend Anschlagmittel (38) an dem ersten Körperteil zum Anschlagen der Dichtungsvorrichtung (18).

## Revendications

1. Appareil (2) pour un engagement étanche avec un objet allongé (4), l'appareil comprenant : -
un dispositif d'étanchéité (18) ;
une première partie de corps (6) ayant une première partie filetée (8) ;
une deuxième partie de corps (12) ayant une deuxième partie filetée (10) adaptée pour s'engager avec ladite première partie filetée (8) ;
un moyen de déformation de joint (16) prévu sur ladite première partie de corps et ayant une pluralité d'éléments allongés (16) ayant des extrémités adaptées pour être déplacées vers l'objet allongé s'étendant à travers un alésage (40) de l'appareil (2) pour amener le dispositif d'étanchéité (18) en engagement étanche avec l'objet allongé (4) ;
au moins une première surface d'engagement (20) prévue sur ladite deuxième partie de corps (12) pour s'engager avec au moins certains desdits éléments allongés (16) afin d'amener lesdites extrémités desdits éléments allongés (16) à se déplacer vers ledit objet allongé (4) à la suite d'un engagement fileté de ladite première partie filetée (8) avec ladite deuxième partie filetée (10) ; et
une pluralité d'éléments d'étanchéité tubulaires (24, 26), où chacun d'une pluralité desdits éléments d'étanchéité tubulaires définit un alésage respectif (34, 36) pour recevoir un objet allongé, et ledit élément d'étanchéité tubulaire est adapté pour être déformé en engagement d'étanchéité avec ledit objet (4) ;
**caractérisé en ce que** le dispositif d'étanchéité comprend : des parties de liaison sous la forme de pattes pouvant être rompues (28) pour relier une paire d'éléments d'étanchéité tubulaires (24, 26) sensiblement coaxiaux adjacents et adaptées pour être rompues par engagement de l'objet allongé avec l'un les éléments d'étanchéité tubulaires (24, 26) au moyen de la poussée dudit objet allongé (4) dans l'alésage (40) de l'appareil pour permettre une séparation desdits éléments d'étanchéité (24, 26).

2. Appareil selon la revendication 1, dans lequel le dispositif d'étanchéité (18) définit une surface (30, 32) de section transversale effilée adjacente à au moins l'une de ses extrémités.

3. Appareil selon l'une quelconque des revendications précédentes, dans lequel lesdites parties de liaison (28) sont agencées de manière adjacente à une extrémité du dispositif d'étanchéité (18).

4. Appareil selon l'une quelconque des revendications précédentes, dans lequel ladite au moins une surface d'engagement (20) comporte au moins une partie de réduction de distance à partir d'un axe dudit appareil avec un mouvement le long dudit axe et un engagement fileté de ladite première partie filetée (8) avec ladite deuxième partie filetée (10) peut provoquer un mouvement axial desdits éléments allongés (16) par rapport à ladite partie.

5. Appareil selon l'une quelconque des revendications précédentes, comprenant en outre un moyen de butée (38) sur ladite première partie de corps pour venir en butée contre ledit dispositif d'étanchéité (18).
